# EUROPÄISCHE PATENTSCHRIFT

(11) **EP 1 481 178 B1**
(45) Veröffentlichungstag und Bekanntmachung des Hinweises auf die Patenterteilung: **20.07.2005**
(21) Anmeldenummer: 03706451.6
(22) Anmeldetag: 07.02.2003
(51) Int. Cl.: F16H 25/02

(54) **GETRIEBE SOWIE MIT DIESEM GETRIEBE AUSGESTATTETER DREHGEBER**
GEAR SYSTEM AND ROTARY TRANSDUCER PROVIDED WITH SAID GEAR SYSTEM
ENGRENAGE ET TRANSDUCTEUR ROTATIF EQUIPE DE CET ENGRENAGE

(30) Priorität: 27.02.2002 DE 10208608
(43) Veröffentlichungstag der Anmeldung: 01.12.2004
(73) Patentinhaber: Dr. Johannes Heidenhain GmbH, 83292 Traunreut (DE)
(72) Erfinder: MITTERREITER, Johann, 83339 Chieming (DE)
(86) Internationale Anmeldenummer: PCT/EP2003/001220
(87) Internationale Veröffentlichungsnummer: WO 2003/072979

(56) Entgegenhaltungen:
- WO-A-90/05617
- DE-A- 19 515 132
- DE-A- 19 820 014

## Beschreibung

Die Erfindung betrifft ein Getriebe gemäß dem Anspruch 1 sowie einen mit diesem Getriebe ausgestatteten Drehgeber gemäß Anspruch 11.

Neben Winkelmessgeräten, die eine Winkelmessung an einer drehbaren Welle in inkrementalen Messschritten ermöglichen, sind auch sogenannte absolute Winkelmessgeräte, auch als Code-Drehgeber bezeichnet, bekannt. Diese gestatten eine Absolutwinkel-Bestimmung innerhalb einer einzigen Wellenumdrehung. Ist zudem die Erfassung der Anzahl erfolgter Wellenumdrehungen nötig, so werden üblicherweise sogenannte Multiturn-Drehgeber eingesetzt. In derartigen Multiturn-Drehgebern erfolgt die Bestimmung der absoluten Winkelposition innerhalb einer Wellenumdrehung, d.h. zwischen 0° und 360°, über eine mit der Welle verbundene Codescheibe, die mit Hilfe einer geeigneten Abtasteinheit abgetastet wird. Dabei wird häufig ein fotoelektrisches Prinzip angewendet, es kann aber auch beispielsweise ein magnetisches Abtastsystem verwendet werden. Zur Gewinnung der erforderlichen Informationen über die Anzahl der erfolgten Wellenumdrehungen ist üblicherweise ein Untersetzungsgetriebe vorgesehen, über das eine oder mehrere weitere Teilscheiben bzw. Codescheiben bei sich drehender Welle in eine Drehbewegung mit geringerer Umdrehungszahl versetzt werden. Häufig sind diese Teilscheiben als magnetisierte Scheiben ausgebildet, die jeweils zumindest einen Nordpol- und Südpol-Sektor aufweisen. Die Drehlage dieser Teilscheiben wird üblicherweise mit geeigneten Abtasteinheiten, insbesondere Hall-Sensoren, in bekannter Art und Weise erfasst. Aufgrund der vorgegebenen Untersetzung der Drehbewegung der zusätzlichen Codescheiben lässt sich so die Zahl der erfolgten Umdrehungen der Welle ermitteln. Eine Messung der Absolutposition der angetriebenen Welle ist somit auch über mehrere Umdrehungen hin möglich.

Ein entsprechend aufgebauter Multiturn-Drehgeber ist beispielsweise aus der DE 19820014 A1 der Anmelderin bekannt.

Die bei derartigen Multiturn-Drehgebern erforderlichen Untersetzungsgetriebe müssen weitgehend spielfrei sein, um eine präzise Erfassung der Wellenumdrehungen zu gewährleisten. Es ergeben sich somit hohe mechanische Anforderungen an die Getriebe eines Multiturn-Drehgebers.

In der EP 0 201 730 A1 ist eine Getriebeanordnung beschrieben, bei der mit der Abtriebswelle Zähne oder sogenannte Pins umlaufen. Die umlaufenden Zähne übertragen das Drehmoment, welches von der Antriebswelle eingeleitet wird. Dabei greifen die über den gesamten Umfang der Abtriebswelle angeordneten Zähne zwischen sogenannte Nadeln ein. Diese Bauweise ist insofern ungünstig, als dass einerseits sehr viele bewegliche Zähne vorgesehen werden müssen, und andererseits ein vergleichsweise großer Bauraum benötigt wird.

Gemäß der Patentschrift US 4 715 247 wird eine Getriebebauweise vorgeschlagen, bei der durch einen Exzenter eine Verformung eines Zahnkranzes verursacht wird, so dass in bestimmten Bereichen des Zahnkranzes ein Eingriff in ein Hohlrad erfolgt. Für die Anwendung als Untersetzungsgetriebe in Drehgebern hat diese Bauweise unter anderem den Nachteil, dass ein vergleichsweise großer Bauraum beansprucht wird.

Es besteht anhaltend der Wunsch nach Drehgebern mit kleineren Baumaßen. Nachdem die elektronischen Bauteile von Drehgebern immer weiter miniaturisiert werden, ist es erforderlich, dass auch der Bauraum für die mechanischen Bauteile dieser Geräte reduziert wird, um diesen Forderungen bezüglich der Baugröße gerecht zu werden.

Der Erfindung liegt die Aufgabe zugrunde, ein möglichst spielfreies und präzise arbeitendes Getriebe zu schaffen, das kleine Baumaße aufweist und einen geringen Fertigungs- und Kostenaufwand erfordert.

Diese Aufgabe wird erfindungsgemäß durch die Merkmale des Anspruches 1 gelöst.

Weiterhin soll das Getriebe gemäß Anspruch 11 in Zusammenhang mit einem Drehgeber eingesetzt werden.

DE-A-195 15 132 offenbart ein Getriebe mit den Merkmalen des Oberbegriffs von Anspruch 1.

Die mit der Erfindung erzielten Vorteile bestehen insbesondere darin, dass nun durch das Getriebe ein sehr großes Untersetzungsverhältnis erreicht werden kann, ohne dass das Getriebe den Außendurchmesser des kompletten Drehgebers vergrößert. Darüber hinaus ist auch der in Axialrichtung erforderliche Bauraum vergleichsweise gering.

Vorteilhafte Ausbildungen der Erfindung entnimmt man den abhängigen Ansprüchen.

In weiterer Ausgestaltung der Erfindung können sowohl das abtriebsseitige Zahnrad als auch die Eingriffselemente derart magnetisiert sein, dass durch magnetische Kräfte die Reibkraft vermindert wird oder dass ein völlig berührungsfreies Getriebe geschaffen wird.

Weitere Einzelheiten und Vorteile des erfindungsgemäßen Getriebes sowie eines damit ausgestatteten Drehgebers ergeben sich aus der nachfolgenden Beschreibung eines Ausführungsbeispieles anhand der beiliegenden Figuren.

Es zeigen die
- Figur 1: eine räumliche Darstellung eines erfindungsgemäßen Getriebes ohne Getriebekasten
- Figur 2a: eine Draufsicht auf das erfindungsgemäße Getriebe
- Figur 2b: eine Detailansicht des Eingriffsbereiches des Getriebes
- Figur 3a bis 3d: eine prinzipielle Darstellung des Getriebemechanismus in verschiedenen Betriebsstellungen,
- Figur 4: eine Schnittdarstellung eines erfindungsgemäßen Drehgebers mit dem Untersetzungsgetriebe.

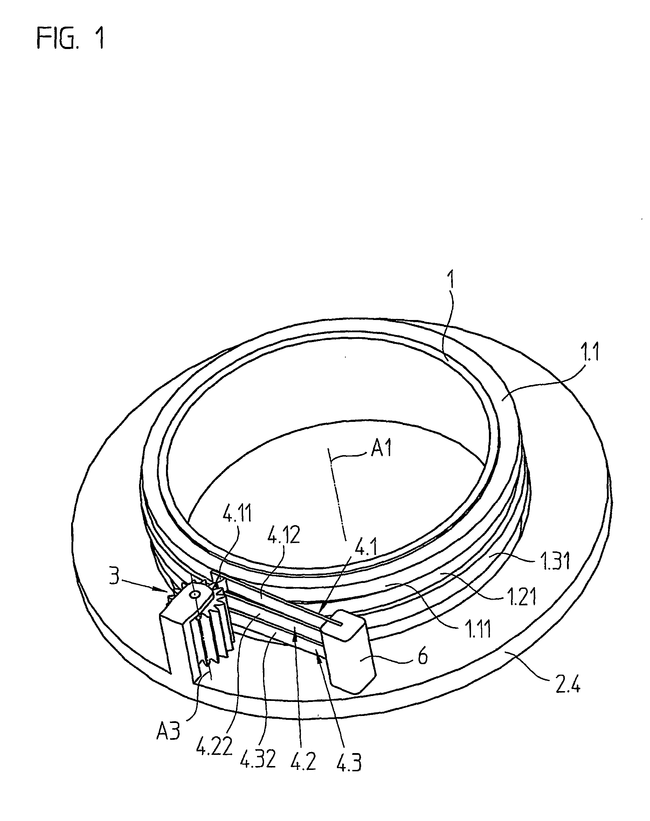

Gemäß der Figur 1 besteht das Getriebe aus einer Hohlwelle 1, auf der Exzenterringe 1.1, 1.2, 1.3 mit kreisförmigen Außenflächen 1.11, 1.21, 1.31 drehfest aufgeklebt sind. Die drei Exzenterringe 1.1, 1.2, 1.3 sind über dem Umfang jeweils um 120° winkelversetzt angeordnet. Das heißt, dass die drei Punkte der Außenflächen 1.11, 1.21, 1.31, welche den maximalen Abstand zur Drehachse A1 der Hohlwelle 1 aufweisen, in Umfangsrichtung jeweils um 120° versetzt sind. Grundsätzlich ist es von Vorteil, wenn der Winkelversatz zwischen allen Exzenterringen 1.1, 1.2, 1.3 gleich groß gewählt ist, so dass bei steigender Anzahl der Exzenterringe 1.1, 1.2, 1.3 der absolute Winkelversatz zwischen zwei benachbarten Exzenterringen 1.1, 1.2, 1.3 kleiner wird.

Im gezeigten Beispiel sind die Exzenterringe 1.1, 1.2, 1.3 auf die Hohlwelle 1 aufgeklebt. Alternativ dazu können die Exzenterringe 1.1, 1.2, 1.3 auch durch eine Presspassung oder eine Keilwellenverzahnung etc. drehfest mit der Hohlwelle 1 verbunden werden. Darüber hinaus kann die Hohlwelle auch so gefertigt werden, dass alleine durch ihre Form selbst geeignete Außenflächen 1.11, 1.21, 1.31 entstehen, ohne dass separate Ringteile verwendet werden.

Die Außenflächen 1.11, 1.21, 1.31 müssen für einen einwandfreien Dauerbetrieb des Getriebes hohen Anforderungen bezüglich der Verschleißfestigkeit genügen. Aus diesem Grund sind die Exzenterringe 1.1, 1.2, 1.3 aus verschleißfestem Keramikmaterial hergestellt. Alternativ hierzu können aber auch die Exzenterringe 1.1, 1.2, 1.3 mit dünnen verschleißfesten Hartstoffschichten versehen werden.

Alternativ zu den kreisförmigen Außenflächen 1.11, 1.21, 1.31 können auch exzentrische Formen bzw. Geometrien gewählt werden, die nicht rotationssymmetrisch sind, wie etwa elliptische-, parabel- oder hyperbelförmige Konturen, die gegebenenfalls als Nocken ausgestaltet sein können.

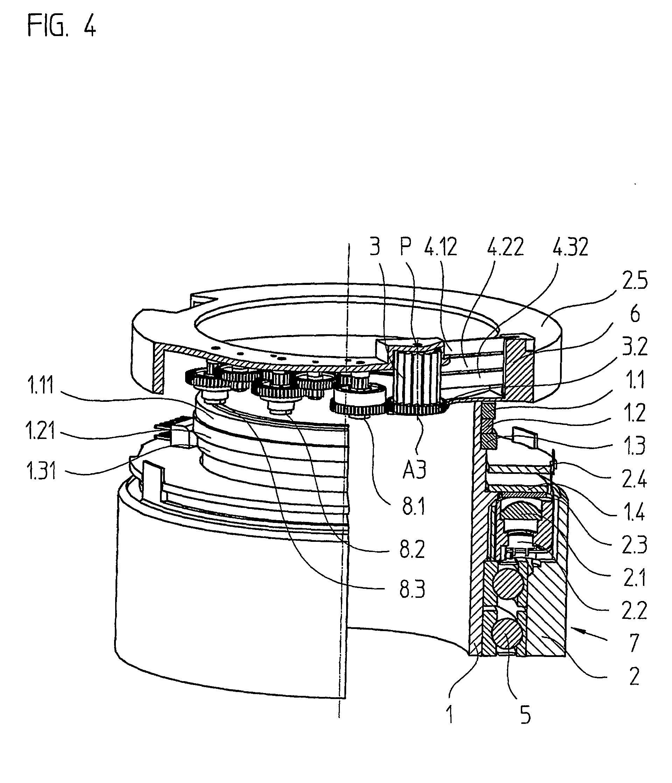

Als weitere Komponente umfasst das Getriebe ein Zahnrad 3, welches um eine Achse A3 drehbar gelagert ist. Die Achse A3 ist bezüglich einer Platine 2.4 eines in der Figur 4 dargestellten Drehgebers 7 ortsfest bzw. nicht verschiebbar. Das Zahnrad 3 weist eine konvexe Gestalt auf, das heißt, dass die Zähne 3.1 von der Drehachse weg radial nach außen weisen. Die Zähne 3.1 des Zahnrads 3 sind zur Minimierung des Verschleißes und für einen dauerhaften Betrieb des Getriebes mit einer verschleißfesten Hartstoffschicht versehen.

Auf der Platine 2.4 ist ein Befestigungsblock 6 ortsfest fixiert, der mit drei Eingriffseinheiten 4.1, 4.2, 4.3 verbunden ist, die ihrerseits aus Blattfedern 4.12, 4.22, 4.32 und Zahnelementen 4.11, 4.21, 4.31 bestehen. Die Hohlwelle 1 ist gegenüber der Platine 2.4 um die Achse A1 drehbar gelagert.

Die Blattfedern 4.12, 4.22, 4.32 bestehen aus einem Stück Federstahlblech, welches geschlitzt ist. Sie sind an dem Ende, welches von den Zahnelementen 4.11, 4.21, 4.31 entfernt ist und welches am Befestigungsblock 6 befestigt ist, zu einem Endstück zusammengefasst.

Die Zahnelemente 4.11, 4.21, 4.31 sind auf die Blattfedern 4.12, 4.22, 4.32 aufgeklebt und sind ebenfalls mit einer verschleißfesten Hartstoffschicht versehen.

Jeder Außenfläche 1.11, 1.21, 1.31 der Exzenterringe 1.1, 1.2, 1.3 ist jeweils eine Eingriffseinheit 4.1, 4.2, 4.3, bestehend aus Blattfedern 4.12, 4.22, 4.32 und Zahnelementen 4.11, 4.21, 4.31 zugeordnet. Im Betrieb des Getriebes drehen sich die Außenflächen 1.11, 1.21, 1.31 der Exzenterringe 1.1, 1.2, 1.3, so dass eine Relativbewegung zwischen diesen Außenflächen 1.11, 1.21, 1.31 und den Blattfedern 4.12, 4.22, 4.32 entsteht. Die Eingriffseinheiten 4.1, 4.2, 4.3 sind dabei so angeordnet, dass die Blattfedern 4.12, 4.22, 4.32 einerseits permanent in Gleitkontakt zu den Außenflächen 1.11, 1.21, 1.31 der Exzenterringe 1.1, 1.2, 1.3 stehen, und andererseits die Zahnelemente 4.11, 4.21, 4.31 jeweils zeitweise, entsprechend der Drehstellung des jeweiligen Exzenterringes 1.1, 1.2, 1.3, zwischen die Zähne 3.1 des Zahnrades 3 eingreifen.

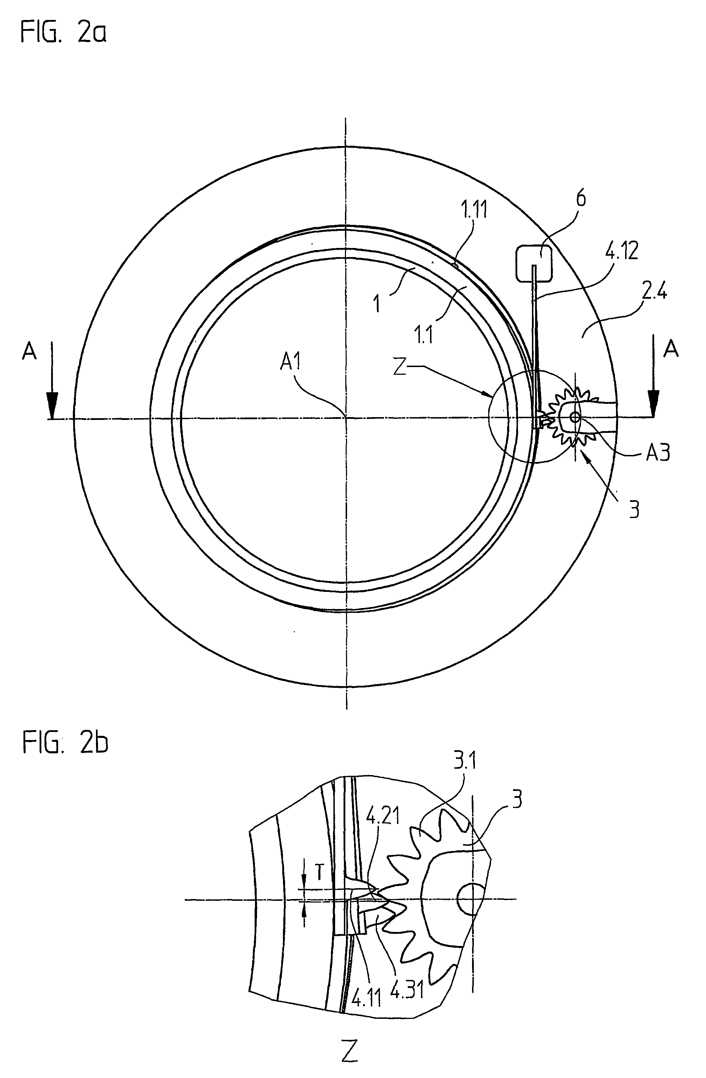

In den Figuren 2a und 2b ist eine Draufsicht auf das erfindungsgemäße Getriebe des Drehgebers gezeigt, wobei zur Veranschaulichung der Erfindung der Getriebekasten 2.5 (Figur 4) weggelassen wurde. Wie oben erwähnt werden die Blattfedern 4.12, 4.22, 4.32 an die Außenflächen 1.11, 1.21, 1.31 der Exzenterringe 1.1, 1.2, 1.3 gedrückt. Die Federkonstanten der Blattfedern 4.12, 4.22, 4.32 sind so bemessen, dass eine permanente Berührung der Eingriffseinheiten 4.1, 4.2, 4.3 mit den Außenflächen 1.11, 1.21, 1.31 der Exzenterringe 1.1, 1.2, 1.3 gewährleistet ist. Ein Abheben der Eingriffseinheiten 4.1, 4.2, 4.3, insbesondere bei hohen Drehzahlen sollte vermieden werden. Andererseits soll zur Reduzierung des Verschleißes und der Reibungsverluste die Andrückkraft nicht zu groß sein. Falls erforderlich können deshalb in diesem Zusammenhang auch zusätzliche Kulissenführungen vorgesehen werden.

Die einzelnen Zahnelemente 4.11, 4.21, 4.31 sind quer zur Axialrichtung der Hohlwelle 1, also in Umfangsrichtung der Innenbohrung der Hohlwelle 1 versetzt angeordnet.

Die Flanken der Zahnelemente 4.11, 4.21, 4.31 und der Zähne 3.1 des Zahnrads 3 sind so gestaltet, dass in diesem Bereich eine Linienberührung gewährleistet ist, wobei sich die Berührlinie während der Bewegung des Getriebes entlang der Flanken verschiebt. Auf diese Weise wird die Belastung und entsprechend der Verschleiß auf größere Bereiche der Flanken verteilt und dadurch reduziert.

Wie bereits oben erwähnt, ist das Endstück der Eingriffseinheiten 4.1, 4.2, 4.3 über einen Befestigungsblock 6 mit dem Getriebekasten 2.5 (Figur 4) fest verbunden. Somit nehmen die drei Eingriffseinheiten 4.1, 4.2, 4.3 nicht an der Drehbewegung der Hohlwelle 1 teil. Die Eingriffseinheiten 4.1, 4.2, 4.3 führen lediglich eine Schwenkbewegung um den Befestigungsblock 6 aus, wobei die Zahnelemente 4.11, 4.21, 4.31 dabei eine Bewegung vollziehen, die eine Komponente aufweist, welche zur Drehachse A3 des Zahnrads 3 gerichtet ist, also eine Bewegung ausführen mit einer bezüglich des Zahnrades 3 radialen Richtungskomponente.

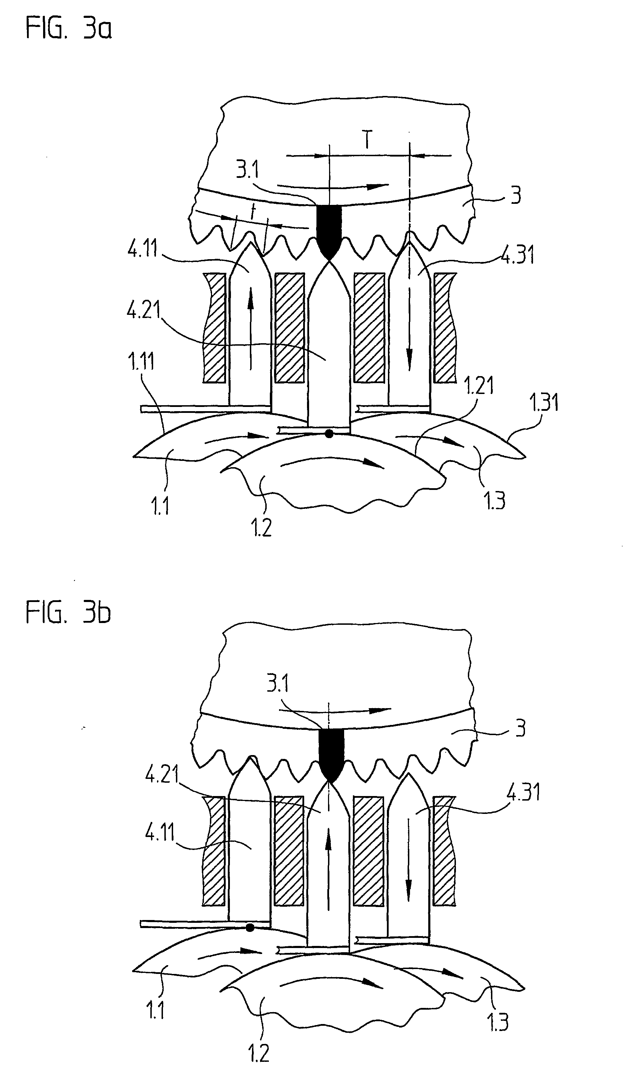

Anhand der Figuren 3a bis 3d kann die Funktionsweise des neuartigen Getriebes erläutert werden. In diesen Figuren ist schematisch vereinfacht der Bewegungsablauf des Getriebes im Zusammenspiel mit seinen Komponenten, den Außenflächen 1.11, 1.21, 1.31 der Exzenterringe 1.1, 1.2, 1.3, den Eingriffseinheiten 4.1, 4.2, 4.3 und dem Zahnrad 3 gezeigt. Die Krümmung der Exzenterringe 1.1, 1.2, 1.3 ist in der Darstellung zur Verdeutlichung des Funktionsprinzips überproportional vergrößert. Die Exzenterringe 1.1, 1.2, 1.3 sollen sich entsprechend der Drehbewegung der Hohlwelle 1 im erläuterten Prinzipbeispiel im Uhrzeigersinn drehen. Zur Verdeutlichung der Drehbewegung wurde ein Zahn 3.1 des Zahnrads 3 geschwärzt dargestellt. Die Funktion des Getriebes wird durch die Verwendung von jeweils dem gleichen Verzahnungs-Modul sowohl für die Bestimmung der Geometrie des Zahnrads 3 als auch der Zahnelemente 4.11, 4.21, 4.31 optimiert.

Gemäß der Figur 3a wird durch die Drehung des Exzenterringes 1.1 eine Bewegung des Zahnelements 4.11 zum Zahnrad 3 hin bewirkt. Das Zahnelement 4.21 befindet sich zu diesem Zeitpunkt gerade an einem Umkehrpunkt. Gleichzeitig verursacht die Drehbewegung des dritten Exzenterringes 1.3 und die Rückholkraft der Blattfeder 4.32 eine Bewegung des Zahnelements 4.31 vom Zahnrad 3 weg. Die Flanken aller Zahnelemente 4.11, 4.21, 4.31 sind in dieser Phase spielfrei im Eingriff mit dem Zahnrad 3. Durch die Drehbewegung des Exzenterringes 1.1 wird das Zahnelement 4.11 in die Lücke zwischen zwei benachbarten Zähnen 3.1 des Zahnrads 3 gedrückt. Die Bewegung des Zahnelementes 4.11 weist deutlich eine radiale Richtungskomponente bezüglich des Zahnrades 3 auf. Durch die schrägen Flanken des Zahnelements 4.11 und der Zähne 3.1 des Zahnrads 3 wird in der Stellung gemäß Figur 3a eine tangentiale Kraft in das Zahnrad 3 eingeleitet.

Diese Tangentialkraft verursacht eine Drehbewegung des Zahnrades 3 entgegen dem Uhrzeigersinn. Durch die Blattfeder 4.12 wird die Reaktionskraft dieser tangentialen Kraft in den Befestigungsblock 6 geleitet, der wiederum fest mit der Platine 2.4 verbunden ist. Auf diese Weise wird durch das Zahnelement 4.11 während des Eingriffes in das Zahnrad 3 ein Drehmoment erzeugt, wobei sich das Zahnelement 4.11 letztlich an der Platine 2.4 und damit am Gehäuse 2 abstützt. Die tangentiale Kraft resultiert also im Wesentlichen aus einer Wirkverbindung zwischen den Zahnelementen 4.11; 4.21; 4.31 und der Platine 2.4.

In der Figur 3b ist eine Stellung der Getriebekomponenten gezeigt, in der das Zahnelement 4.11 einen Umkehrpunkt erreicht hat. Nun wird das Drehmoment über das Zahnelement 4.21 übertragen, das durch die Bewegung zum Zahngrund des Zahnrads 3 hin gleichzeitig eine Tangentialkraft in das Zahnrad 3 einleitet. Das Zahnelement 4.31 bewegt sich vom Zahnrad 3 weg.

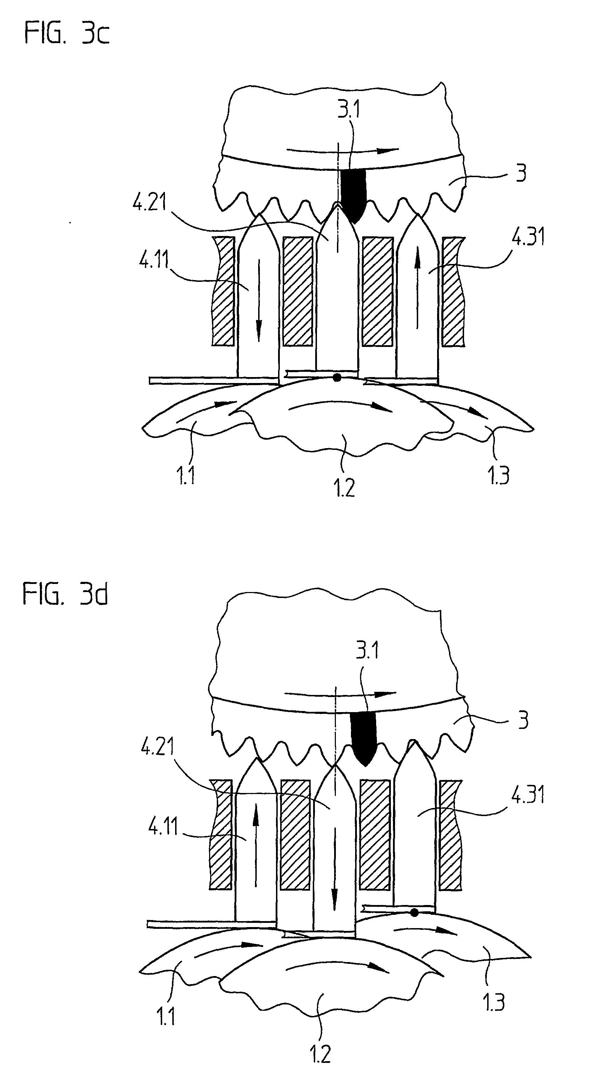

Das Zahnelement 4.21 hat in der Figur 3c wieder einen Umkehrpunkt erreicht, und zwar in der Stellung in der das Zahnelement 4.21 am weitesten in das Zahnrad 3 eingreift, bzw. wo das Zahnelement 4.21 am weitesten von der Drehachse A1 der Hohlwelle 1 entfernt ist. Bis zu dieser Stellung wurde das Zahnrad 3 bereits um eine halbe Teilung t entgegen dem Uhrzeigersinn weitergedreht. Nun wird ein Drehmoment vom Zahnelement 4.31 in das Zahnrad eingeleitet, während sich das Zahnelement 4.11 aus dem Zahngrund zurückzieht.

In der Figur 3d hat das Zahnelement 4.31 seinen Umkehrpunkt mit maximalen Abstand zur Drehachse A1 der Hohlwelle 1 erreicht. Das Zahnelement 4.11 beginnt in dieser Stellung durch die Bewegung zum Zahngrund des Zahnrads 3 dieses zu treiben.

Pro Umdrehung der Hohlwelle 1 wird das Zahnrad 3 um einen Zahn 3.1 weitergedreht. Entsprechend ergibt sich das Untersetzungsverhältnis aus der Anzahl der Zähne 3.1 des Zahnrads 3. In diesem Ausführungsbeispiel weist das Zahnrad 3 sechzehn Zähne 3.1 auf, so dass sich ein Untersetzungsverhältnis von 1 : 16 ergibt.

Bei der Betrachtung der Figuren 3a bis 3d ist es offensichtlich, dass die Flankenneigungen bzw. -krümmungen der Zahnelemente 4.11, 4.21, 4.31 und der Zähne 3.1 des Zahnrads 3 an den Reibungskoeffizienten bzw. den Reibwinkel der entsprechenden Werkstoff- und Oberflächenpaarungen angepasst werden muss, um eine optimale Funktionsfähigkeit und Lebensdauer des Getriebes zu gewährleisten, zumal im gezeigten Beispiel keine Schmierung des Getriebes vorgesehen ist. Im Ausführungsbeispiel wird in allen Stellungen eine Linienberührung zwischen den Zahnelementen 4.11, 4.21, 4.31 und den Zähnen 3.1 erzeugt, wobei sich der Ort dieser Linienberührung während des Bewegungsablaufes stets verändert. Auf diese Weise wird eine lokale Überbeanspruchung der Zahnelemente 4.11, 4.21, 4.31 und der Zähne 3.1 vermieden.

Alternativ zu dem gezeigten Ausführungsbeispiel können die Zahnelemente 4.11, 4.21, 4.31 und die Zähne 3.1 des Zahnrads so magnetisiert werden, dass durch magnetische Abstoßungskräfte ein berührungs- und damit verschließfreier Betrieb des Getriebes möglich wird. Zu diesem Zweck können zum Beispiel die Zahnelemente 4.11, 4.21, 4.31 und die Zähne 3.1 durch Magnetisierung in jeweils radialer Richtung als gleichnamige Pole ausgebildet werden, so dass sich im Betrieb beispielsweise immer Südpole gegenüber stehen.

Durch das gleichzeitige Eingreifen von zumindest zwei Zahnelementen 4.11, 4.21, 4.31 wird stets ein spielfreier Betrieb des Getriebes gewährleistet. Darüber hinaus ist durch die Verwendung von drei (oder ggf. auch mehr) Zahnelementen 4.11, 4.21, 4.31 gewährleistet, dass das Getriebe bei einer Drehrichtungsumkehr keinen Totpunkt aufweist.

Wie aus der Funktionsbeschreibung des erfindungsgemäßen Getriebes hervorgeht, ist der Eingriffsbereich in welchem jeweils ein Zahnelement 4.11, 4.21, 4.31 in das Zahnrad 3 eingreift stationär oder ortsfest in Bezug auf die Platine 2.4. Mit anderen Worten ausgedrückt, führen die Zahnelemente 4.11, 4.21, 4.31 eine Schwenkbewegung um einen ortsfesten Drehpunkt aus.

Selbstverständlich schließt die Erfindung auch eine Anordnung mit ein, bei der die Zahnelemente 4.11, 4.21, 4.31 ohne Tangential- bzw. Umfangsversatz übereinander angeordnet sind und ein entsprechender Versatz durch einen speziellen Aufbau des Zahnrads erreicht wird. Zu diesem Zweck kann etwa das Zahnrad aus drei gleichen übereinander gesetzten Zahnradscheiben bestehen, die entsprechend zueinander winkelversetzt bzw. drehversetzt angeordnet sind.

Im oben beschriebenen Beispiel wird durch die Blattfedern 4.12, 4.22, 4.32 sowohl die Anfederungs-, die Schwenk- und die Abstützfunktion bzgl. der Tangentialkraft erreicht. Die Erfindung umfasst aber auch Konstruktionen, bei der diese Funktionen auf mehrere Bauelemente aufgeteilt sind. So können beispielsweise Spiralfedern zwischen den Exzenterringen 1.1, 1.2, 1.3 und den Zahnelementen 4.11, 4.21, 4.31 angeordnet sein, um die Federfunktion zu erfüllen. Entsprechend sind dann vergleichsweise steife Abstützelemente, etwa in Form von Stäben mit den Zahnelementen 4.11, 4.21, 4.31 und dem Befestigungsblock 6 verbunden. Damit die Schwenkbewegungen durchgeführt werden können, sind dann in jedem Stab Verjüngungen bzw. Dünnstellen vorgesehen, die als Gelenk dienen. Auf diese Weise ist in Längsrichtung der Stäbe eine ausreichende Festigkeit zur Übertragung der Tangentialkraft gegeben, während durch das Einleiten eines Biegemomentes, verursacht durch die Exzentrizität der Exzenterringe 1.1, 1.2, 1.3 das Gelenk gebogen und eine Schwenkbewegung der Zahnelemente 4.11, 4.21, 4.31 ermöglicht wird. Darüber hinaus kann aber auch mit Vorteil der Befestigungsblock 6 selbst als Teil eines Drehgelenkes (Zylinder) ausgebildet sein, wobei dann Bereiche der Stäbe jeweils das Gegenstück (Ring) zur Vervollständigung des Drehgelenkes darstellen. Auf die oben genannten Dünnstellen in den Stäben kann bei dieser Ausführung verzichtet werden.

Das Getriebe ist in einem Multiturn-Drehgeber 7 zur Bestimmung der absoluten Winkelposition eingebaut. Gemäß der Figur 4 umfasst der Drehgeber eine Hohlwelle 1 in der eine in der Figur 4 nicht dargestellte Welle drehfest aufgenommen werden kann, deren Drehwinkel dann im Betrieb des Drehgebers gemessen wird. Die Hohlwelle 1 dreht sich demnach mit derselben Geschwindigkeit wie die Welle. Die Hohlwelle 1 weist in dem gezeigten Ausführungsbeispiel drei Exzenterringe 1.1, 1.2, 1.3 auf, die durch Kleben mit der Hohlwelle 1 drehfest verbunden sind. Jeder Exzenterring 1.1, 1.2, 1.3 hat somit eine kreisförmige Bohrung in welche die Hohlwelle 1 eingeführt wird und eine kreisförmige Außenfläche 1.11, 1.21, 1.31. Die Mittelpunkte dieser kreisförmigen Geometrien sind entsprechend der Exzentrizität jeweils versetzt.

An einem Absatz der Hohlwelle 1 ist eine Codescheibe 1.4 befestigt, in diesem Beispiel festgeklebt, so dass die Codescheibe 1.4 mit der gleichen Drehzahl wie die Hohlwelle 1 im Messbetrieb rotiert. Zur Erfassung der absoluten Position innerhalb einer Umdrehung der Hohlwelle 1 trägt die Codescheibe 1.4 einen mehrspurigen Code, in der Regel ein Gray-Code, wobei die feinste Spur eine hochauflösende Inkrementalspur ist, die vorteilhafterweise möglichst weit außen am Umfang der Codescheibe 1.4 angeordnet ist, um möglichst viele Teilungsperioden über den Umfang anordnen zu können. Je mehr Teilungsperioden über den gesamten Umfang angeordnet sind, desto höher ist die zu erfassende Winkelauflösung des Drehgebers.

Im nicht rotierenden Gehäuse 2 des Drehgebers 7 befindet sich eine Lichtquelle 2.2, eine Linse 2.1 und eine Abtastplatte 2.3. Darüber hinaus ist mit dem Gehäuse 2 eine Platine 2.4, an deren Unterseite Fotodetektoren angebracht sind, drehfest verbunden. Mit Hilfe dieser optischen Winkelabtasteinrichtung werden inkremental und/oder absolut die jeweilige Winkelposition innerhalb einer Umdrehung der Hohlwelle 1 bestimmt. Zwischen dem Gehäuse 2 und der Hohlwelle 1 sind Kugellager 5 vorgesehen, so dass eine relative Drehbewegung zwischen der Hohlwelle 1 und dem Gehäuse 2 möglich ist.

Zur Multiturn-Messung wird das erfindungsgemäße Getriebe und die damit zusammenwirkenden weiteren Getriebestufen benötigt. Diese sind in einem Getriebekasten 2.5 integriert, dessen Außenwandung in der Figur 4 der Übersichtlichkeit halber teilweise weggelassen wurde. Als Trägerkörper ist in diesem Beispiel also der nicht-rotierende Getriebekasten 2.5 gezeigt. Ebenso könnte, wie oben bereits beschrieben, die nicht-rotierende Platine 2.4 als Trägerkörper verwendet werden. Der Getriebekasten 2.5 ist drehfest mit dem Gehäuse 2 verbunden und nimmt somit also nicht an der Rotationsbewegung der Hohlwelle 1 und auch nicht an der Rotationsbewegung des Zahnrads 3 teil. Die Drehachse A3 des Zahnrads 3 ist dementsprechend gegenüber dem Getriebekasten 2.5 und damit gegenüber dem Gehäuse 2 nicht verschiebbar. Mit dem Getriebekasten 2.5 ist des weiteren ein Befestigungsblock 6 verbunden. An diesem Befestigungsblock 6 sind drei Blattfedern 4.12, 4.22, 4.32 befestigt an denen wiederum jeweils ein Zahnelement 4.11, 4.21, 4.31 aufgeklebt ist. Mit Hilfe dieser Elemente wird die Drehbewegung der Hohlwelle 1 mit der gegebenen Untersetzung gemäß dem oben beschriebenen Funktionsprinzip schlupffrei auf das Zahnrad 3 übertragen. Drehfest mit dem Zahnrad 3 ist ein weiteres Zahnrad verbunden, das mit einem Zahnrad einer weiteren Untersetzungsstufe kämmt. An der Welle dieser weiteren Untersetzungsstufe ist eine Teilscheibe 8.1 mit einer magnetischen Teilung befestigt. Darüber hinaus sind weitere Getriebestufen mit weiteren Teilscheiben 8.2 und 8.3 entsprechend angeordnet. Die Drehachsen der Teilscheiben 8.1, 8.2, 8.3 sind parallel zur Hohlwelle 1 ausgerichtet. Jede der Teilscheiben 8.1, 8.2, 8.3 besteht aus einem Magnetkörper mit in Umfangsrichtung abwechselnd angeordneten Magnetpolen (Nord-Süd), im einfachsten Fall sind die Teilscheiben 8.1, 8.2, 8.3 jeweils als kurze Stabmagnete mit einem einzigen Nord- und Südpol ausgeführt. Die magnetischen Teilungen der Teilscheiben 8.1, 8.2, 8.3 sind in einer gemeinsamen Ebene angeordnet.

Die Teilscheibe 8.1 dreht sich langsamer als die Hohlwelle 1, die weiteren Getriebestufen führen zu einer weiteren Reduzierung der Drehzahlen der entsprechenden Teilscheiben 8.2, 8.3.

Durch Detektoreinrichtungen, hier Hallsensoren, an der Oberseite der Platine 2.4, die in der Figur 4 nicht dargestellt sind, werden die Winkelpositionen der Teilscheiben 8.1, 8.2, 8.3 bestimmt. Die Teilscheiben 8.1, 8.2, 8.3 dienen also zur Messung der Anzahl der Umdrehungen der Hohlwelle 1, wobei jede Teilscheibe 8.1, 8.2, 8.3 über das Untersetzungsgetriebe von der jeweils vorgeschalteten Getriebestufe untersetzt angetrieben wird. Zum platzsparenden Aufbau sind die Teilscheiben 8.1, 8.2, 8.3, wie auch das Drehlager P der Drehachse A3 des Zahnrads 3, innerhalb des Umfangsbereiches der Codescheibe 1.4 angeordnet, so dass die Drehachse A3 des Zahnrades 3 die Codescheibe 1.4 durchdringt.

Anstelle von Hall-Sensoren als Detektoreinrichtungen können auch magnetoresistive Sensoren, wie AMR- ,GMR- (Giant Magneto Resistive) oder TMR-Sensoren (Tunnel Magneto Resistive) eingesetzt werden.

Dadurch, dass die magnetischen Teilungen der Teilscheiben 8.1, 8.2, 8.3 in einer Ebene angeordnet sind, können die dazugehörigen Detektoreinrichtungen relativ einfach auf der Oberseite der Platine 2.4 untergebracht werden. Auf der Unterseite der Platine 2.4 sind, wie oben beschrieben, die entsprechenden Fotodetektoren angebracht. Es können beide Seiten der Platine 2.4 mit elektronischen Bausteinen bestückt werden, was insbesondere Vorteile bezüglich des Raumbedarfs als auch der Wirtschaftlichkeit der Herstellung hat.

Die Komponenten der optischen Abtastung (insbesondere die Lichtquelle 2.2, die Linse 2.1, die Abtastplatte 2.3 und die Codescheibe 1.4) befinden sich bei dem Drehgeber 7 gemäß der Figur 4 also unterhalb der Platine 2.4, wobei die Fotoelemente an der Unterseite der Platine 2.4 angebracht sind. An der Oberseite der Platine 2.4 sind unter anderem die Detektoreinrichtungen für die Erfassung der Drehstellungen der Teilscheiben 8.1, 8.2, 8.3 befestigt. Über der Platine ist gemäß Figur 4 das neuartige Getriebe und die weiteren Getriebestufen angebracht.

Durch die beschriebene Bauweise kann also ein Drehgeber 7 geschaffen werden, der überaus geringe Baumaße aufweist und mit einem Getriebe mit den bereits genannten Vorteilen ausgestattet ist.

Die Anwendung des Getriebes ist nicht auf Drehgeber beschränkt, deren inkrementale Abtastung auf einem optischen Prinzip beruht, oder deren Zählung der Umdrehungen auf einem magnetischen Abtastprinzip basiert. Ebenso sind hier unter anderem auch kapazitiv oder induktiv wirkende Drehgeber mit eingeschlossen.

## Patentansprüche

1. Getriebe bestehend aus
- einem ersten Teil (1),
- einem konvexen Zahnrad (3), welches um eine Achse (A3) drehbar gelagert ist,
- einem Trägerkörper (2.4; 2.5), gegenüber welchem sowohl das erste Teil (1) als auch das konvexe Zahnrad (3) jeweils drehbar gelagert ist, und
- Eingriffselementen (4.11; 4.21; 4.31), die abhängig von der Drehstellung des ersten Teils (1) in das Zahnrad (3) eingreifen und dabei bezüglich des Zahnrades (3)
· eine Bewegung mit einer radialen Richtungskomponente ausführen und
· eine Kraft mit einer tangentialen Richtungskomponente in das Zahnrad (3) einleiten, wobei diese Kraft zumindest teilweise aus einer Wirkverbindung zwischen den Eingriffselementen (4.11; 4.21; 4.31) und dem Trägerkörper (2.4; 2.5) resultiert,
**dadurch gekennzeichnet, dass**
die Eingriffselemente (4.11; 4.21; 4.31) mit Hilfe von Federelementen (4.12; 4.22: 4.32) an das erste Teil (1) gedrückt werden, und durch die Federelemente (4.12; 4.22; 4.32) Rückholkräfte erzeugbar sind, die eine Bewegung der Eingriffselemente (4.11; 4.21; 4.31) von der Achse (A3) des Zahnrads (3) weg bewirken.

2. Getriebe gemäß Anspruch 1, **dadurch gekennzeichnet, dass** das erste Teil (1) eine exzentrische Form am Außenumfang aufweist.

3. Getriebe gemäß einem der vorhergehenden Ansprüche, **dadurch gekennzeichnet, dass** die Federelemente (4.12; 4.22; 4.32) als Blattfedern ausgestaltet sind.

4. Getriebe gemäß einem der vorhergehenden Ansprüche, **dadurch gekennzeichnet, dass** die Eingriffselemente (4.11; 4.21; 4.31) zumindest in Teilbereichen eine konische oder keilförmige Gestalt aufweisen.

5. Getriebe gemäß einem der vorhergehenden Ansprüche, **dadurch gekennzeichnet, dass** die Eingriffselemente (4.11; 4.21; 4.31), in Umfangsrichtung des ersten Teils (1) versetzt, angeordnet sind.

6. Getriebe gemäß einem der vorhergehenden Ansprüche, **dadurch gekennzeichnet, dass** die Eingriffselemente (4.11; 4.21; 4.31), in Axialrichtung des ersten Teils (1) versetzt, angeordnet sind.

7. Getriebe gemäß einem der Ansprüche 2 bis 6, **dadurch gekennzeichnet, dass** jedes Eingriffselement (4.11; 4.21; 4.31) jeweils mit einer exzentrische Fläche (1.11; 1.21; 1.31) in Wirkverbindung ist, wobei die jeweiligen exzentrischen Flächen (1.11; 1.21; 1.31) über dem Umfang des ersten Teils (1) winkelversetzt angeordnet sind.

8. Getriebe gemäß einem der vorhergehenden Ansprüche, **dadurch gekennzeichnet, dass** jedem Eingriffselement (4.11; 4.21; 4.31) jeweils ein Bereich des Zahnrades (3) zugeordnet ist, der gegenüber einem anderen Bereich des Zahnrades (3) eine winkelversetzte Anordnung der Zähne (3.1) aufweist.

9. Getriebe gemäß einem der vorhergehenden Ansprüche, **dadurch gekennzeichnet, dass** die Eingriffselemente (4.11; 4.21; 4.31) und das Zahnrad (3) derart magnetisiert sind, dass zwischen jeweils einem Zahn (3.1) und einem dazu gegenüberliegenden Eingriffselement (4.11; 4.21; 4.31) die Flächenpressung reduziert oder aufgehoben wird.

10. Getriebe gemäß Anspruch 9, **dadurch gekennzeichnet, dass** zwischen jeweils einem Zahn (3.1) und einem dazu gegenüberliegenden Eingriffselement (4.11; 4.21; 4.31) abstoßende Magnetkräfte erzeugt werden.

11. Drehgeber mit einer oder mehreren Getriebestufen zur Umsetzung der Drehbewegung einer Welle in eine Drehbewegung mit definiertem Untersetzungsverhältnis, wobei mindestens eine der Getriebestufen aus
- einem ersten Teil (1),
- einem konvexen Zahnrad (3), welches um eine Achse (A3) drehbar gelagert ist,
- einem Trägerkörper (2.4; 2.5), gegenüber welchem sowohl das erste Teil (1) als auch das konvexe Zahnrad (3) jeweils drehbar gelagert ist, und
- Eingriffselementen (4.11; 4.21; 4.31), die abhängig von der Drehstellung des ersten Teils (1) in das Zahnrad (3) eingreifen und dabei bezüglich des Zahnrades (3)
· eine Bewegung mit einer radialen Richtungskomponente ausführen und
· eine Kraft mit einer tangentialen Richtungskomponente in das Zahnrad (3) einleiten, wobei diese Kraft zumindest teilweise aus einer Wirkverbindung zwischen den Eingriffselementen (4.11; 4.21; 4.31) und dem Trägerkörper (2.4; 2.5) resultiert, besteht,
**dadurch gekennzeichnet, dass**
die Eingriffselemente (4.11; 4.21; 4.31) mit Hilfe von Federelementen (4.12; 4.22; 4.32) an das erste Teil (1) gedrückt werden, und durch die Federelemente (4.12; 4.22; 4.32) Rückholkräfte erzeugbar sind, die eine Bewegung der Eingriffselemente (4.11; 4.21; 4.31) von der Achse (A3) des Zahnrads (3) weg bewirken.

12. Drehgeber gemäß Anspruch 11, wobei die Achse (A3) des Zahnrades (3) eine Codescheibe (1.4) des Drehgebers durchdringt.

## Claims

1. Gear system comprising:
- a first part (1),
- a convex gear wheel (3), which is mounted so as to be rotatable about an axis (A3),
- a carrier element (2.4; 2.5), with respect to which both the first part (1) and the convex gear wheel (3) are each rotatably mounted, and
- engaging elements (4.11; 4.21; 4.31), which engage in the gear wheel (3) as a function of the rotary position of the first part (1) and in so doing, with respect to the gear wheel (3),
· execute a movement having a radial directional component, and
· introduce a force having a tangential directional component into the gear wheel (3), this force resulting at least partially from an operative connection between the engaging elements (4.11; 4.21; 4.31) and the carrier element (2.4; 2.5),
**characterised in that**
the engaging elements (4.11; 4.21; 4.31) are pressed against the first part (1) with the aid of spring elements (4.12; 4.22; 4.32), and restoring forces can be generated by the spring elements (4.12; 4.22; 4.32), which forces cause a movement of the engaging elements (4.11; 4.21; 4.31) away from the axis (A3) of the gear wheel (3).

2. Gear system according to claim 1, **characterised in that** the first part (1) has an eccentric shape at the outer circumference.

3. Gear system according to one of the preceding claims, **characterised in that** the spring elements (4.12; 4.22; 4.32) are designed as leaf springs.

4. Gear system according to one of the preceding claims, **characterised in that** the engaging elements (4.11; 4.21; 4.31) have a conical or wedge-shaped form at least in partial regions.

5. Gear system according to one of the preceding claims, **characterised in that** the engaging elements (4.11; 4.21; 4.31) are arranged offset in the circumferential direction of the first part (1).

6. Gear system according to one of the preceding claims, **characterised in that** the engaging elements (4.11; 4.21; 4.31) are arranged offset in the axial direction of the first part (1).

7. Gear system according to one of claims 2 to 6, **characterised in that** each engaging element (4.11; 4.21; 4.31) is respectively in operative connection with an eccentric surface (1.11; 1.21; 1.31), the respective eccentric surfaces (1.11; 1.21; 1.31) being arranged at an angular offset over the circumference of the first part (1).

8. Gear system according to one of the preceding claims, **characterised in that** with each engaging element (4.11; 4.21; 4.31) there is associated respectively a region of the gear wheel (3) which has an angularly offset arrangement of the teeth (3.1) with respect to another region of the gear wheel (3).

9. Gear system according to one of the preceding claims, **characterised in that** the engaging elements (4.11; 4.21; 4.31) and the gear wheel (3) are magnetised in such a way that the compressive load per unit area is reduced or cancelled between, in each case, one tooth (3.1) and an engaging element (4.11; 4.21; 4.31) lying opposite it.

10. Gear system according to claim 9, **characterised in that** repulsing magnetic forces are generated between, in each case, one tooth (3.1) and an engaging element (4.11; 4.21; 4.31) lying opposite it.

11. Rotary transducer having one or more gear steps for converting the rotary motion of a shaft into a rotary motion having a defined reducing ratio, at least one of the gear steps comprising:
- a first part (1),
- a convex gear wheel (3), which is mounted so as to be rotatable about an axis (A3),
- a carrier element (2.4; 2.5), with respect to which both the first part (1) and the convex gear wheel (3) are each rotatably mounted, and
- engaging elements (4.11; 4.21; 4.31), which engage in the gear wheel (3) as a function of the rotary position of the first part (1) and in so doing, with respect to the gear wheel (3),
· execute a movement having a radial directional component, and
· introduce a force having a tangential directional component into the gear wheel (3), this force resulting at least partially from an operative connection between the engaging elements (4.11; 4.21; 4.31) and the carrier element (2.4; 2.5),
**characterised in that**
the engaging elements (4.11; 4.21; 4.31) are pressed against the first part (1) with the aid of spring elements (4.12; 4.22; 4.32), and restoring forces can be generated by the spring elements (4.12; 4.22; 4.32), which forces cause a movement of the engaging elements (4.11; 4.21; 4.31) away from the axis (A3) of the gear wheel (3).

12. Rotary transducer according to claim 11, wherein the axis (A3) of the gear wheel (3) penetrates a code disk (1.4) of the rotary transducer.

## Revendications

1. Engrenage constitué
- d'une première partie (1),
- d'une roue dentée (3) convexe qui est montée avec possibilité de rotation autour d'un axe (A3),
- d'un corps support (2.4; 2.5) par rapport auquel aussi bien la première partie (1) que la roue dentée (3) convexe sont montées avec possibilité de rotation, et
- d'éléments d'engrènement (4.11; 4.21; 4.31) qui engrènent avec la roue dentée (3) en fonction de la position angulaire de la première partie (1) et, par rapport à la roue dentée (3),
- exécutent un mouvement avec une composante directionnelle radiale et
- appliquent à la roue dentée (3) une force qui présente une composante directionnelle tangentielle et résulte au moins en partie d'une liaison active entre les éléments d'engrènement (4.11; 4.21 4.31) et le corps support (2.4; 2.5),
**caractérisé par le fait que** les éléments d'engrènement (4.11; 4.21; 4.31) sont pressés à l'aide d'éléments à ressort (4.12; 4.22; 4.32) contre la première partie (1) et les éléments à ressort (4.12; 4.22; 4.32) peuvent produire des forces de rappel qui provoquent le déplacement des éléments d'engrènement (4.11; 4.21; 4.31) dans la direction opposée à l'axe (A3) de la roue dentée (3).

2. Engrenage selon la revendication 1, **caractérisé par le fait que** la première partie (1) présente une forme excentrique sur son pourtour extérieur.

3. Engrenage selon une des revendications précédentes, **caractérisé par le fait que** les éléments à ressort (4.12; 4.22; 4.32) sont réalisés comme lames de ressort.

4. Engrenage selon une des revendications précédentes, **caractérisé par le fait que** les éléments d'engrènement (4.11; 4.21; 4.31) présentent une forme de cône ou de coin, au moins dans des zones partielles.

5. Engrenage selon une des revendications précédentes, **caractérisé par le fait que** les éléments d'engrènement (4.11; 4.21; 4.31) sont décalés dans la direction périphérique de la première partie (1).

6. Engrenage selon une des revendications précédentes, **caractérisé par le fait que** les éléments d'engrènement (4.11; 4.21; 4.31) sont décalés dans la direction axiale de la première partie (1).

7. Engrenage selon une des revendications 2 à 6, **caractérisé par le fait que** chaque élément d'engrènement (4.11; 4.21; 4.31) est en liaison active respectivement avec une surface excentrique (1.11; 1.21; 1.31), lesdites surfaces excentriques (1.11; 1.21; 1.31) étant disposées avec des décalages angulaires sur le pourtour de la première partie (1).

8. Engrenage selon une des revendications précédentes, **caractérisé par le fait qu'**à chaque élément d'engrènement (4.11; 4.21; 4.31) est associée une partie de la roue dentée (3) dont les dents (3.1) présentent un décalage angulaire par rapport à une autre partie de la roue dentée (3).

9. Engrenage selon une des revendications précédentes, **caractérisé par le fait que** les éléments d'engrènement (4.11; 4.21; 4.31) et la roue dentée (3) sont magnétisés de manière telle que la pression superficielle entre une dent (3.1) et un élément d'engrènement (4.11; 4.21; 4.31) situé en vis-à-vis soit réduite ou annulée.

10. Engrenage selon la revendication 9, **caractérisé par le fait que** des forces magnétiques répulsives sont produites entre une dent (3.1) et un élément d'engrènement (4.11; 4.21; 4.31) situé en vis-à-vis.

11. Encodeur comprenant un ou plusieurs étages d'engrenages pour convertir le mouvement de rotation d'un arbre en un mouvement de rotation avec un rapport de réduction défini, au moins l'un des étages d'engrenages étant constitué
- d'une première partie (1),
- d'une roue dentée (3) convexe qui est montée avec possibilité de rotation autour d'un axe (A3),
- d'un corps support (2.4; 2.5) par rapport auquel aussi bien la première partie (1) que la roue dentée (3) convexe sont montées avec possibilité de rotation, et
- d'éléments d'engrènement (4.11; 4.21; 4.31) qui engrènent avec la roue dentée (3) en fonction de la position angulaire de la première partie (1) et, par rapport à la roue dentée (3),
- exécutent un mouvement avec une composante directionnelle radiale et
- appliquent à la roue dentée (3) une force qui présente une composante directionnelle tangentielle et résulte au moins en partie d'une liaison active entre les éléments d'engrènement (4.11; 4.21 4.31) et le corps support (2.4; 2.5),
**caractérisé par le fait que** les éléments d'engrènement (4.11; 4.21; 4.31) sont pressés à l'aide d'éléments à ressort (4.12; 4.22; 4.32) contre la première partie (1) et les éléments à ressort (4.12; 4.22; 4.32) peuvent produire des forces de rappel qui provoquent le déplacement des éléments d'engrènement (4.11; 4.21; 4.31) dans la direction opposée à l'axe (A3) de la roue dentée (3).

12. Encodeur selon la revendication 11, dans lequel l'axe (A3) de la roue dentée (3) traverse un disque codeur (1.4) de l'encodeur.
